# EUROPÄISCHE PATENTSCHRIFT

(11) **EP 1 175 596 B1**
(45) Veröffentlichungstag und Bekanntmachung des Hinweises auf die Patenterteilung: **02.02.2005**
(21) Anmeldenummer: 00936620.4
(22) Anmeldetag: 13.04.2000
(51) Int. Cl.: G01D 5/14, G01D 5/16

(54) **MAGNETISCHER POSITIONSSENSOR**
Magnetic position sensor
Capteur magnétique de position

(30) Priorität: 17.04.1999 DE 19917465
(43) Veröffentlichungstag der Anmeldung: 30.01.2002
(73) Patentinhaber: ROBERT BOSCH GMBH, 70442 Stuttgart (DE)
(72) Erfinder: REICHL, Asta, D-70499 Stuttgart (DE); KLOTZBUECHER, Thomas, D-70635 Rudersberg (DE)
(86) Internationale Anmeldenummer: PCT/DE2000/001143
(87) Internationale Veröffentlichungsnummer: WO 2000/063649

(56) Entgegenhaltungen:
- DE-A- 4 437 751
- DE-U- 29 817 399
- US-A- 4 712 064
- EBERHARDT ET AL.: "Anwendung von Feldplatten beim elektrischen Messen nichtelektrischen Grössen" SIEMENS-BAUTEILE-INFORMATIONEN, Bd. 6, Nr. 5, Oktober 1968 (1968-10), Seiten 172-177, XP002146491

## Beschreibung

### Stand der Technik

Die Erfindung geht aus von einer Meßvorrichtung nach der Gattung des Anspruchs 1. Aus der DE 29 23 644 C2 ist ein Sensor bekannt, der einen zylinderförmig ausgebildeten, aus ferromagnetischem Material bestehenden Rahmen aufweist. Im Rahmen wird gleitend ein Permanentmagnet bewegt, dessen Bewegung proportional zur Bewegung eines Bauteils ist. Ferner ist in einem Spalt des Rahmens und somit im vom Magneten erzeugten geschlossenen Magnetkreis ein magnetfeldempfindliches Element angeordnet, dessen Ausgangssignal proportional zur Bewegung des Magneten ist. Da der Magnet aber unmittelbar an der Innenseite des Rahmens gleitet, können hohe Reibungsverluste entstehen, die das Ausgangssignal verfälschen. In der DE,U,298 17 399 ist eine Wegmeßvorrichtung gezeigt, die aus mindestens zwei Flußleitteilen aus magnetisch leitendem Material, einem bewegten Magneten und einem zwischen den zwei Flußleitteilen angeordneten magnetfeldempfindlichen Element besteht. Dabei ist der Magnet an einer Trägerplattte aus magnetisch leitendem Material so angeordnet, daß die Trägerplatte Teil des Magnetflusses ist.

### Vorteile der Erfindung

Die erfindungsgemäße Meßvorrichtung mit dem kennzeichnenden Merkmalen des Anspruchs 1 hat demgegenüber den Vorteil, daß der Träger des Magneten in besonders einfacher Weise sowohl zur Übertragung der zu messenden Bewegung und als Träger für den Magneten dient und gleichzeitig auch zur Leitung des Magnetflusses beiträgt. Durch Variation der Länge des Magneten bzw. eine Aufteilung in einzelne Abschnitte kann in einfacher Weise eine Meßkurve mit einer oder mehreren Abflachungen erzeugt werden.

Der Sensor ist aufgrund seines einfachen Aufbaus mit relativ geringem Montageaufwand in verschiedenen Systemen, wie zum Beispiel einer Drosselmeßvorrichtung, eines Pedalmoduls für einen Brems- und Gaspedalwertgeber integrierbar oder als eigenständiger Sensor bei Drosselklappengebern oder einer Karosserieeinfederungsvorrichtung verwendbar.

Durch die in den Unteransprüchen aufgeführten Maßnahmen sind vorteilhafte Weiterbildungen und Verbesserungen der im Anspruch 1 angegebenen Meßvorrichtung möglich.

### Zeichnung

Ausführungsbeispiele der Erfindung sind in der Zeichnung dargestellt und in der nachfolgenden Beschreibung näher erläutert.
Die Figur 1 und 2 zeigt ein erstes Ausführungsbeispiel im Längsschnitt und in einer Draufsicht.
Die Figur 3 zeigt im Diagramm den Verlauf der magnetischen Induktion B über den gesamten Meßbereich c (c = a + b) und die Stellung des Magneten gegenüber dem magnetfeldempfindlichem Meßelement an drei im Diagramm dargestellten Positionen I bis III.
Die Figuren 4 bis 9 zeigen Längsschnitte bzw. Draufsichten von Abwandlungen des Ausführungsbeispiels.
In der Figur 10 ist in einem Diagramm der Verlauf der magnetischen Induktion B über den zu messenden Weg c mit einem Plateaubereich X in der Mitte der Messkurve gezeigt. Die Stellung des Magneten gegenüber dem magnetfeldempfindlichen Element ist darüber an drei verschiedenen Positionen I bis III dargestellt.

### Beschreibung der Ausführungsbeispiele

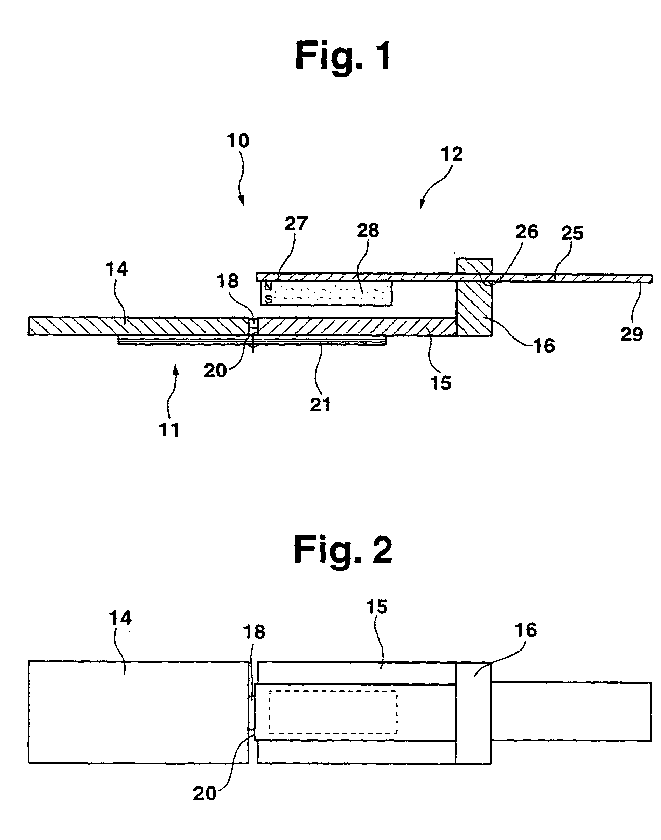

In der Figur 1 ist mit 10 ein Sensor bezeichnet, der einen Stator 11 und ein bewegliches Teil 12 aufweist. Der Stator 11 besteht aus einer aus zwei Teilen 14, 15 bestehenden Grundplatte und einer Seitenplatte 16, die etwa senkrecht zur Grundplatte angeordnet ist. Die beiden Teile 14, 15 der Grundplatte und die Seitenplatte 16 bestehen aus magnetisch leitendem Material, zum Beispiel Weicheisen. Zwischen den beiden Teilen 14, 15 der Grundplatte befindet sich ein Spalt 18, in dem ein magnetfeldempfindliches Element 20 angeordnet ist. Als magnetfeldempfindliches Element 20 kann zum Beispiel eine Feldplatte, ein Magnettransistor, Spulen, magnetoresistive Elemente oder ein Hall-Elememt verwendet werden. Wichtig hierbei ist, daß das magnetfeldempfindliche Bauteil eine möglichst lineare Abhängigkeit seines Ausgangssignals von der magnetischen Induktion B aufweist. In den Figuren ist jeweils eine Messung mit Hilfe eines einzigen magnetfeldempfindlichen Elements, eines Hall-Elements, dargestellt. In diesem Fall sollte das Element möglichst mittig im Spalt 18 angeordnet sein. Hingegen wäre es auch möglich, zum Beispiel weitere magnetfeldempfindliche Elemente anzuordnen, um zum Beispiel eine sogenannte redundante Messung (Sicherheitsmessung) durchführen zu können. Vom magnetfeldempfindlichen Element 20 führen Leitungen zu einer auf der Unterseite der Teile 14, 15 der Grundplatte angeordneten Leiterplatte 21.

Das bewegliche Teil 12 besteht aus einer Trägerplatte 25, die ebenfalls aus magnetisch leitfähigem Material, wie zum Beispiel Weicheisen, besteht. Die Trägerplatte 25 ragt durch eine in der Seitenplatte 16 ausgebildete Ausnehmung 26. Das in den Sensor 10 hineinragende Ende 27 der Trägerplatte 25 weist einen Magneten, d.h. einen Permanentmagneten 28, auf. Das andere Ende 29 der Trägerplatte 25 befindet sich außerhalb des Sensors 10. An diesem Ende 29 ist ein nicht dargestelltes Bauteil angeordnet, dessen Bewegung erfaßt werden soll.

Der Permanentmagnet 28 weist eine Polarisierungsrichtung senkrecht zur Bewegungsrichtung R der Trägerplatte 25 auf, d.h. seine Polarisation ist senkrecht zur Grundplatte bzw. parallel zur Seitenplatte 16 ausgerichtet. In der Figur 1 ist der Permanentmagnet 28 kürzer als sein Gesamtmeßbereich c ausgebildet. Dies heißt auch, daß der Permanentmagnet 28 nicht so lang wie das Teil 15 der Grundplatte ist. Der Permanentmagnet 28 ist auf der der Grundplatte zugewandten Seite der Trägerplatte 25 angeordnet. Ferner findet sich zwischen dem Permanentmagneten 28 und der Oberfläche der Grundplatte ein geringer Spalt, um eine leichte Beweglichkeit des bewegten Teils 12 gegenüber dem Stator 11 zu ermöglichen. Dieser Spalt sollte aber möglichst gering gehalten werden und während der Messung konstant sein.

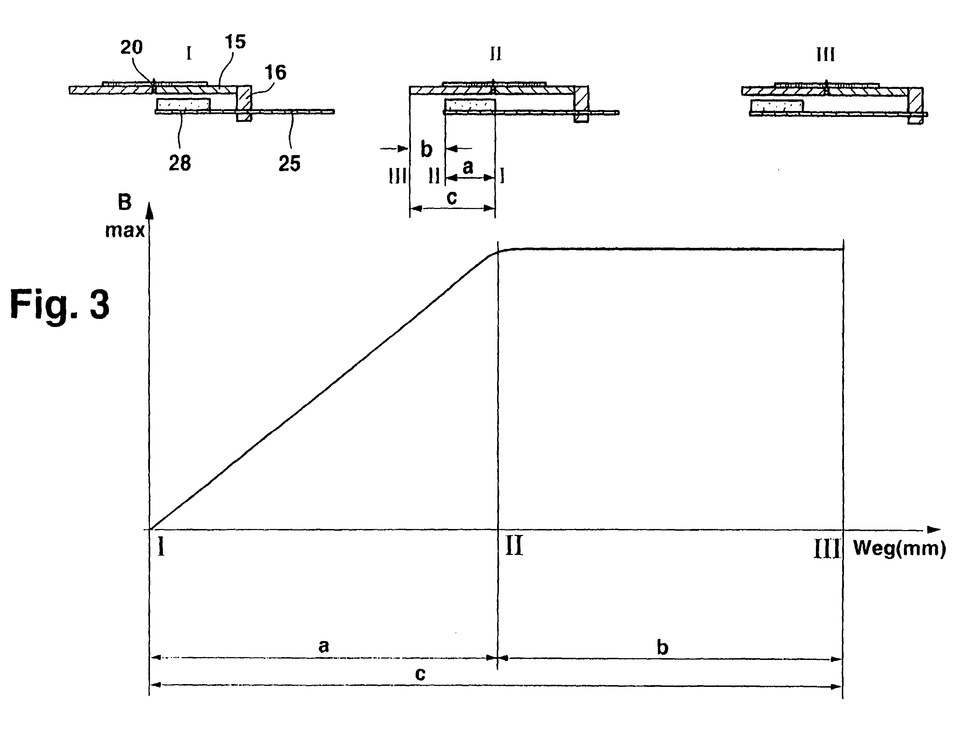

Ist der Permanentmagnet 28 geringer als die Gesamtmeßstrecke c, so ergibt sich, wie aus der Figur 3 ersichtlich, ein Plateaubereich. Ist nun der Permanentmagnet 28 nahezu am Ende 27 angeordnet, so entsteht der Plateaubereich am Ende der Meßkurve. Ist hingegen der Permanentmagnet 28 mit einem Abstand zum Ende 27 der Trägerplatte 25 an der Trägerplatte 25 angeordnet, so würde der Plateaubereich zu Beginn der Meßkurve entstehen.

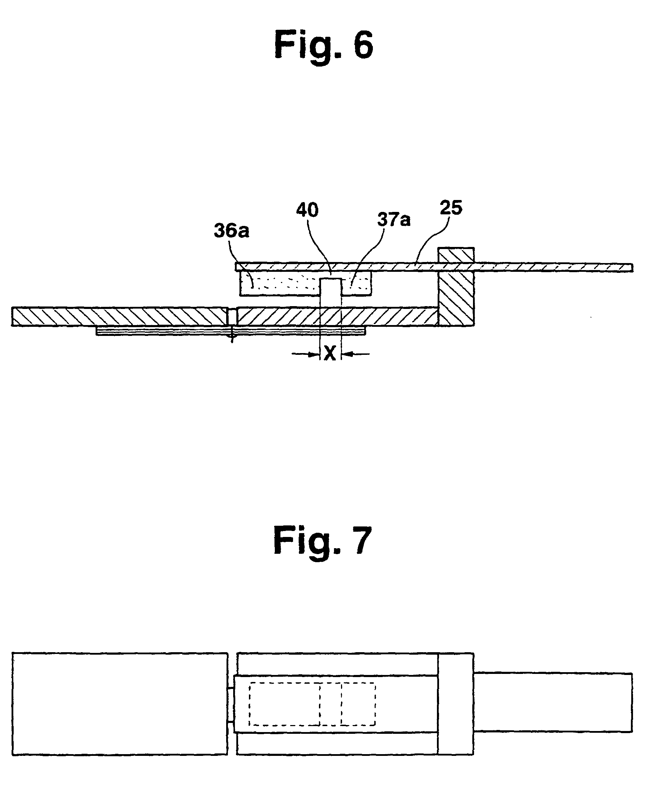

Im Diagramm nach der Figur 3 ist der Verlauf der Kennlinie der magnetischen Induktion B im Element 20, zum Beispiel einem Hall-Element, über dem Weg c der Trägerplatte 25 bzw. des daran angeordneten Bauteils dargestellt. Es ist erkennbar, daß bei einem Weg c = 0 die Induktion B ebenfalls Null beträgt, während sie nach einer Wegstrecke a bei der Position II den maximalen Induktionswert B = Max erreicht. Die Position bei Weg c = 0 ist mit I im Diagramm bezeichnet und der gesamte Weg c mit III. Der Weg c setzt sich zusammen aus dem Weg a und dem Plateaubereich b. Über dem Diagramm ist die jeweilige Stellung des bewegten Teils 12, d.h. des Magneten 28 gegenüber dem Element 20 für die drei Positionen I, II und III dargestellt. In der Position I verläuft der Magnetfluß des Magneten 28 vom Magneten 28 durch den Luftspalt zum Teil 15 der Grundplatte. Im Teil 15 fließt der Magnetfluß zur Seitenplatte 16 und dort über die Trägerplatte 25 zurück zum Permanentmagneten 28. Es ist ersichtlich, daß in der Position I kein Magnetfluß über den Spalt 18 und somit durch das magnetfeldempfindliche Element 20 erfolgt. In der Position II ist nun die Trägerplatte 25 mit dem Magneten 28 über den Spalt 18 zum Teil 14 der Trägerplatte 11 hin so weitergeschoben, daß nach einer Wegstrecke a das Ende des Permanentmagneten 28 gerade den Spalt 18 überschritten hat und sich der Permanentmagnet 28 somit nur noch im Bereich des Teils 14 der Grundplatte 11 und nicht mehr im Bereich des Teils 15 der Grundplatte 11 befindet. Die Position II ist die Stellung, in der der Magnetfluß des Permanentmagneten 28 vollständig über den Spalt 18 und somit durch das Element 20 hindurch verläuft und im Element 20 die maximal mögliche magnetische Induktion B = Max erzeugt wird. Der Magnetfluß in der Position II ist somit vom Permanentmagneten 28 über den Spalt in das Teil 14 der Grundplatte. Von dort fließt der Magnetfluß über den Spalt 18 und das Element 20 in das Teil 15 der Grundplatte und von dort weiter über die Seitenplatte 16 und die Trägerplatte 25 zurück in den Magneten 28. Wird nun das bewegte Teil 12, d.h. der Permanentmagnet 28, weiterhin in der Figur nach links verschoben, d.h. der Magnet 28 wird im Bereich des Teils 14 der Grundplatte 11 weiter vom Spalt 18 wegbewegt, so ändert sich der Magnetfluß im Element 20 nicht. Es fließt weiterhin der maximal mögliche Magnetfluß durch das Element 20, in dem die maximal mögliche magnetische Induktion B = Max erzeugt wird. Dadurch entsteht zwischen der Position II und der Position III ein Plateaubereich, der die Länge b aufweist. Der Plateaubereich b bzw. wie bei der Figur 6 und 7 Bereiche mit unterschiedlicher Steigung im Meßdiagramm sind notwendig, um verschiedene Vorgänge steuern zu können.

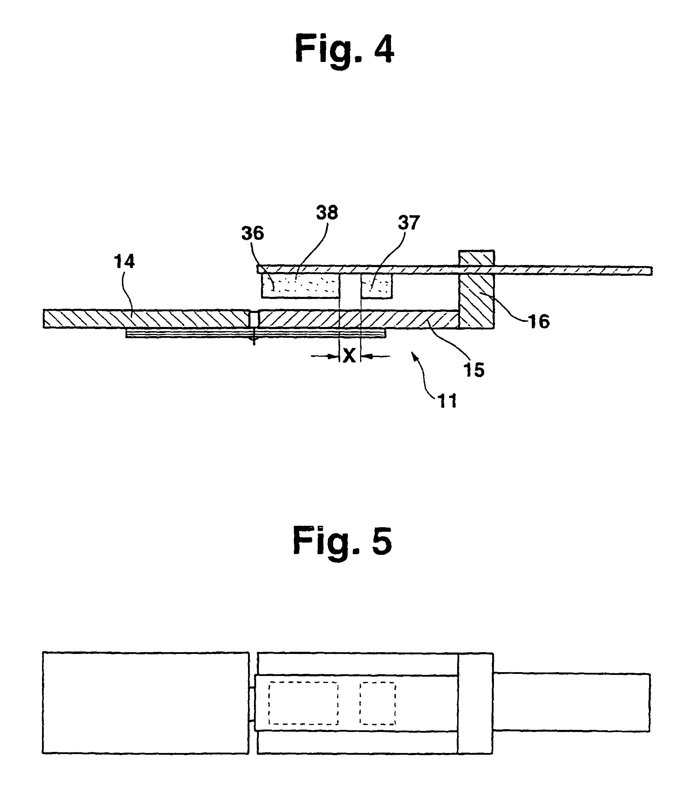

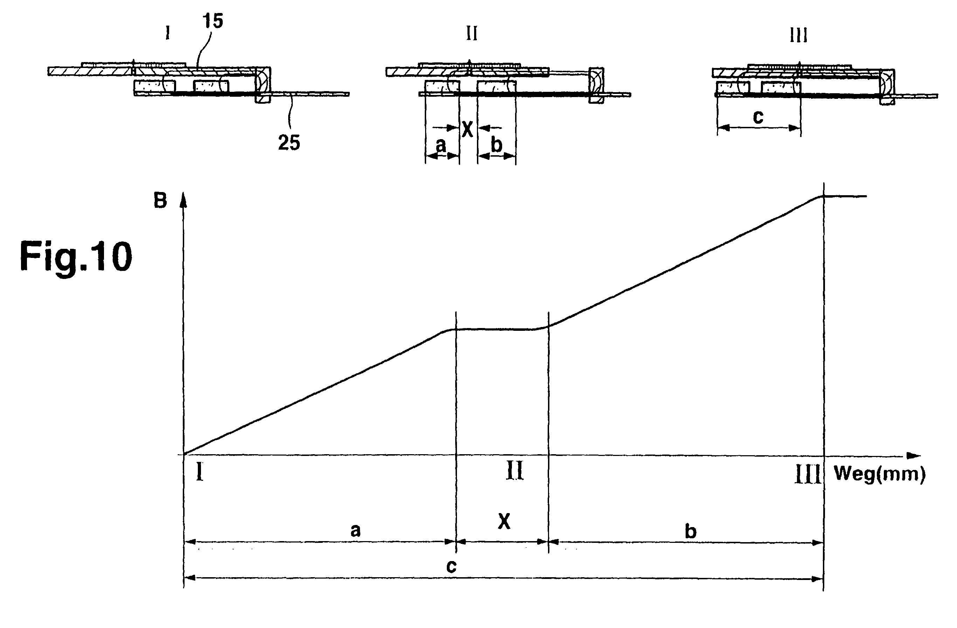

Erfindungswesentlich ist es, daß die Länge a des Permanentmagneten 28 kleiner als der gesamte Meßbereich c bzw. kleiner als das als Flußleitteil dienende Teil 15 der Grundplatte 11 ist. Im bisherigen Ausführungsbeispiel war der Permanentmagnet 28 einteilig ausgebildet und so auf der Trägerplatte 25 angeordnet, daß der Beginn des Permanentmagneten auch am Beginn des Meßbereichs lag. Im Ausführungsbeispiel nach den Figuren 4 und 5 und dem Diagramm nach Figur 10 ist nun der Permanentmagnet 38 aus zwei Teilen 36, 37 aufgebaut. Durch diesen zweiteiligen Aufbau wird der Plateaubereich P, der dem Weg x des Sensors 10 entspricht, zwischen zwei linear verlaufende Kurvenabschnitte verlagert (Figur 10). Die Größe der beiden Permanentmagnetteile 36, 37 können unterschiedlich groß oder auch gleich groß sein. Dies ist davon abhängig, wie lang der Weg a bzw. b der Meßkurve sein soll. Auf jeden Fall muß aber die Gesamtlänge c, die sich zusammensetzt aus der Länge a + x + b kleiner oder gleich der Gesamtlänge c sein.

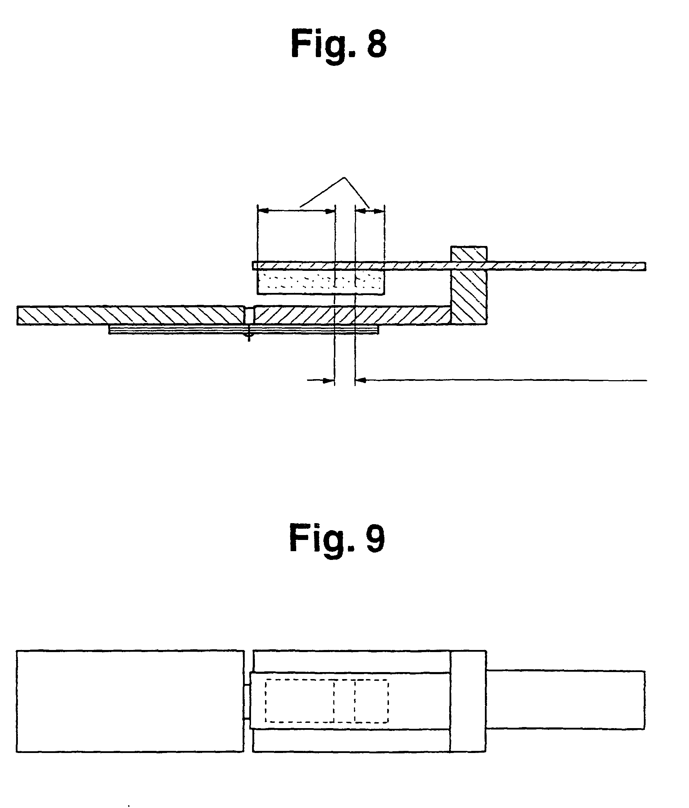

Die beiden Teile 36, 37 des Permanentmagneten 38 sind in gleicher Richtung magnetisiert, d.h. sie haben eine Magnetisierungsrichtung bzw. Polarisierungsrichtung senkrecht zur Bewegungsrichtung des bewegten Teils 12, d.h. die Polarisierungsrichtung des Magneten 28 ist senkrecht zur Grundplatte bzw. parallel zur Seitenplatte 16. Dadurch, daß nun der Meßbereich x zwischen den beiden Permanentmagnetteilen 36, 37 liegt, wird der Plateaubereich P in den Verlauf der Meßlinie hinein verlegt, so daß man eine Kennlinie, analog wie in der Figur 10 dargestellt, erhält. In der Figur 10 ist nun eine Kennlinie dargestellt, bei der die beiden Permanentmagnetteile 36, 37 gleich groß sind. In der Figur 4 ist der Permanentmagnetteil 36 größer als der Permanentmagnetteil 37, was bedeuten würde, daß die Meßstrecke a größer als die Meßstrecke b wäre. Ferner wäre es auch möglich, mehr als zwei Permanentmagnetteile, d.h. drei, vier etc. anzuordnen. Dadurch wäre es möglich, eine entsprechend gewünschte Anzahl von Plateaus in der Meßlinie zu erzeugen. Statt eines Permanentmagneten wäre es auch möglich, auf der Trägerplatte 25, wie in der Figur 8 und 9 dargestellt, magnetisierte Bereiche zu erzeugen. Diese Ausführung würde für alle hier erwähnten Ausführungsbeispiele anwendbar sein und ist beispielhaft in der Figur 8 und 9 dargestellt. Mit Hilfe des oder der Plateaus bzw. von der eigentlichen Meßkurve abweichenden Abschnitte können bestimmte Steuerungen durchgeführt werden.

Im Diagramm nach der Figur 10 ist wiederum der Verlauf der magnetischen Induktion B über den Weg c dargestellt. Für die drei Positionen I (Weg c = 0) und III (Weg c = max , d.h. C = a + x + b) und für die Position II, die sich im Plateaubereich P, d.h. in der Meßstrecke x befindet, dargestellt. Bei der Position I befinden sich beide Teile 36, 37 des Permanentmagneten 38 im Bereich des Teils 15 der Grundplatte. Bei dieser Stellung I ergibt sich kein Magnetfluß über den Spalt 18 und somit durch das magnetfeldempfindliche Element 20. Dies bedeutet, daß im Element 20 keine magnetische Induktion B erfolgt. Der Magnetfluß sowohl des Teils 36, als auch des Teils 37 erfolgt über den Spalt in das Teil 15 der Grundplatte und von dort über die Seitenplatte 16 und die Trägerplatte 25 zurück in die beiden Teile 36, 37 des Permanentmagneten 38. Befindet sich, wie in der Position II, der eine Permanentmagnetteil 36 im Bereich des Teils 14 und der andere Teil 37 des Permanentmagneten 38 im Bereich des Teils 15 der Grundplatte, so befindet sich der Spalt 18 und somit das Element 20 im Bereich x zwischen den beiden Magnetteilen 36, 37. Dies bedeutet, daß sich in der Position II im Diagramm nach der Figur 10 ein Plateaubereich P ergibt, der die Länge x, d.h. die Länge zwischen den beiden Permanentmagnetteilen 36, 37 hat. Aus der Figur II ist der jeweilige Magnetfluß der Teile 36, 37 des Permanentmagneten 38 erkennbar. Der Magnetfluß des Permanentmagneten 37, der der Platte 15 zugeordnet ist, erfolgt nach wie vor nicht über das Element 20. Der Magnetfluß des Teils 37 verläuft nach wie vor vom Teil 37 über den Spalt zum Teil 15 der Grundplatte 11 und über die Seitenplatte 16 und die Trägerplatte 25 zurück zum Teil 37 des Permanentmagneten 38. Der Magnetfluß des anderen Teils 36 des Permanentmagneten 38 erfolgt vom Teil 36 über den Spalt in das Teil 14 der Trägerplatte 11. Von dort erfolgt der Magnetfluß über den Spalt 18 und somit durch das Element 20 in das Teil 15 der Grundplatte 11 und über die Seitenplatte 16 und die Trägerplatte 25 zurück zum Magnetteil 36. Während der Wegstrecke x ändert sich somit der Magnetfluß durch das Element 20 nicht.

In der Position III sind nun nach der Wegstrecke c (c = a + x + b) beide Permanentmagnetteile 36 und 37 dem Teil 14 der Grundplatte zugeordnet. Dies bedeutet, daß sowohl der Magnetfluß des Teils 36 als auch des Teils 37 durch das Element 20 verläuft und somit dort die maximale magnetische Induktion B = Max erzeugt wird. Aus der Darstellung für die Position III ist erkennbar, daß sowohl der Magnetfluß des Teils 36, als auch des Teils 37 von den jeweiligen Teilen über dem Spalt in das Teil 14 der Grundplatte verläuft. Von dort ist der Magnetfluß über den Spalt 18 und durch das Element 20 in das Teil 15 und über die Seitenplatte 16 und die Trägerplatte 25 zurück zu den jeweiligen Teilen des Permanentmagneten 38.

Während bei den bisherigen Ausführungsbeispielen eine Trennung der beiden Permanentmagnetteile 36 bzw. 37 vorhanden ist, können auch die Teile mit einem kleinen Steg miteinander verbunden werden. Ein entsprechendes Ausführungsbeispiel ist in den Figuren 6 und 7 dargestellt. Der Steg 40 ist in Figur 6 an der Trägerplatte 25 anliegend ausgebildet, d.h. er verbindet die an der Trägerplatte 25 anliegende Fläche der beiden Teile 36a und 37a des Permanentmagneten. Selbstverständlich wäre es auch möglich, den Verbindungssteg 40 vom äußeren Rand, d.h. im Bereich des Magneten, der der Grundplatte 11 zugeordnet ist, oder mittig bzw. seitlich hinten und/oder vorn anzuordnen. Aufgrund dieses Verbindungsstegs 40 verläuft nun die Meßkurve im Bereich der Wegstrecke x nicht mehr flach als Plateau, wie bei den bisherigen Ausführungsbeispielen und in der Figur 10 dargestellt, sondern abhängig von der Breite des Verbindungsstegs 40 weist die Meßkurve im Bereich x eine Steigung auf. Die Steigung ist über die Größe, insbesondere die Breite, beeinflußbar. Dies bedeutet, daß auch ein breiterer Steg als die Permanentmagnetteile möglich ist, und somit in diesem Bereich ein steilerer Kurvenverlauf als im Bereich der Permanentmagnetteile erreichbar ist.

## Patentansprüche

1. Wegmessvorrichtung (10) bestehend aus mindestens zwei Flussleitteilen (11, 14, 15, 16) aus magnetisch leitendem Material, einem bewegten Magneten (28) und mindestens einem in einem Spalt (18) zwischen zwei Flussleitteilen (11, 14, 15, 16) angeordneten magnetfeldempfindlichen Element (20-), wobei der Magnet (28) an einer Trägerplatte (25) angeordnet ist, die aus magnetisch leitendem Material besteht, so dass die Trägerplatte (25) Teil des Magnetflusses ist, **dadurch gekennzeichnet, dass** der Magnet (28) kleiner als die Gesamtmessstrecke (c) ausgebildet ist.

2. Wegmessvorrichtung nach Anspruch 1, **dadurch gekennzeichnet, dass** der Magnet (28) aus mehreren Teilen (36, 37) besteht, die durch einen Abschnitt aus nicht magnetischem Material getrennt sind.

3. Wegmessvorrichtung nach Anspruch 1, **dadurch gekennzeichnet, dass** wenigstens zwei Teile (26a, 37a) des Magneten mit Hilfe eines Stegs (40) miteinander verbunden sind.

4. Wegmessvorrichtung nach einem der Ansprüche 1 bis 3, **dadurch gekennzeichnet, dass** die Trägerplatte (25) in einer Ausnehmung (26) eines Flussleitteils (16) geführt ist.

5. Wegmessvorrichtung nach einem der Ansprüche 1 bis 4, **dadurch gekennzeichnet, dass** der Magnet (28) senkrecht zu seiner Bewegungsrichtung polarisiert ist.

6. Wegmessvorrichtung nach einem der Ansprüche 1 bis 5, **dadurch gekennzeichnet; dass** das magnetfeldempfindliche Element ein Hall-Element (20) ist.

## Claims

1. Distance measurement apparatus (10) comprising at least two flux guidance parts (11, 14, 15, 16) composed of magnetically permeable material, a moving magnet (28) and at least one element (20) which is sensitive to magnetic fields and is arranged in a gap (18) between two flux guidance parts (11, 14, 15, 16), with the magnet (28) being arranged on a mounting plate (25) which is composed of magnetically permeable material, such that the mounting plate (25) is part of the magnetic flux, **characterized in that** the magnet (28) is smaller than the overall measurement distance (c).

2. Distance measurement apparatus according to Claim 1, **characterized in that** the magnet (28) is formed from two or more parts (36, 37) which are separated by a section composed of nonmagnetic material.

3. Distance measurement apparatus according to Claim 1, **characterized in that** at least two parts (26a, 37a) of the magnet are connected to one another by means of a web (40).

4. Distance measurement apparatus according to one of Claims 1 to 3, **characterized in that** the mounting plate (25) is guided in a recess (26) in a flux guidance part (16).

5. Distance measurement apparatus according to one of Claims 1 to 4, **characterized in that** the magnet (28) is polarized at right angles to its movement direction.

6. Distance measurement apparatus according to one of Claims 1 to 5, **characterized in that** the element which is sensitive to magnetic fields is a Hall element (20).

## Revendications

1. Capteur de position (10), constitué d'au moins deux parties conductrices de flux (11, 14, 15, 16) faites d'un matériau conducteur magnétoconducteur, d'un aimant (28) mobile et d'au moins un élément sensible au champ magnétique (20) disposé dans une fente (18) entre deux parties conductrices de flux (11, 14, 15, 16), l'aimant (28) étant disposé au niveau d'une plaque de support (25) faite d'un matériau magnétoconducteur, de telle sorte que la plaque de support (25) est une partie du flux magnétique,
**caractérisé en ce que**
l'aimant (28) est configuré de façon à être plus petit que le parcours de mesure global (c).

2. Capteur selon la revendication 1,
**caractérisé en ce que**
l'aimant (28) se compose de plusieurs parties (36, 37), séparées par une section faite d'un matériau non magnétique.

3. Capteur selon la revendication 1,
**caractérisé en ce qu'**
au moins deux parties (26a, 37a) de l'aimant sont reliées entre elles à l'aide d'une traverse (40).

4. Capteur selon l'une des revendications 1 à 3,
**caractérisé en ce que**
la plaque de support (25) est guidée dans un évidement (26) d'une pièce conductrice de flux (16).

5. Capteur selon l'une des revendications 1 à 4,
**caractérisé en ce que**
l'aimant (28) est polarisé perpendiculairement à sa direction de mouvement.

6. Capteur selon l'une des revendications 1 à 5,
**caractérisé en ce que**
l'élément sensible au champ magnétique est un élément Hall (20).
